# EUROPEAN PATENT APPLICATION

(11) **EP 1 431 652 A2**
(43) Date of publication of application: **23.06.2004**
(21) Application number: 03425799.8
(22) Date of filing: 12.12.2003
(51) Int. Cl.: F16M 11/04

(54) **Universal supporting bracket used to hang sound and/or image reproduction devices from the ceiling**

(30) Priority: 18.12.2002 IT MC20020115
(71) Applicant: Euromet S.n.c. di Stacchiotti Franco & C., 60025 Loreto (AN) (IT)
(72) Inventor: Stacchiotti, Franco, 60025 Loreto (AN) (IT)
(74) Representative: Baldi, Claudio, Ing.

(57) **Abstract**

The present invention relates to a universal supporting bracket used to hang sound and/or image reproduction devices from the ceiling, which consists in a rod (1) ending with a disk (3) connected to multiple radial arms (4) that can be adjusted both in height and angular position.

## Description

The present patent application for industrial invention relates to a universal supporting bracket used to hang sound and/or image reproduction devices from the ceiling.

In particular, the following description refers to the sector of video-projectors, where the problem for which the bracket of the invention has been specifically devised originated. It is understood, however, that the inventive idea that has inspired the universal bracket of the invention for video-projectors can be indifferently used to design any type of support for similar objects that may have the same inconvenience as video-projectors fixed to the ceiling.

Reference is made to the fact that every model of video-projector needs a specific supporting bracket, since manufacturers have deliberately decided not to harmonise the shape and dimensions of the anchoring platform of video-projectors. Therefore, each video-projector is equipped with a specific anchoring bracket that is not interchangeable with the brackets produced by other competitors.

As a matter of fact, attempts have been made to propose universal supporting brackets, in view of the fact that anchoring platforms are most of the times provided with ordinary fixing screws and four fixing points with four threaded holes for the fixing screws used to fix the video-projector to the supporting bracket.

The universal brackets that are currently available on the market basically consist in a bearing rod that supports a flange at the end, from which four coplanar radial arms spread out. The external end of the radial arms is provided with a hole that houses the screw used to fix the arm to the anchoring platform of the video-projector.

The versatility of use of these brackets derives from the fact that each of the four radial arms is adjustably fixed to the central flange with the possibility of rotating rightwards or leftwards, or sliding in centrifugal or centripetal direction, in such a way that the holding position of the arm can be adjusted from time to time in order to coaxially place the unthreaded hole of the arm over the threaded hole on the anchoring platform of the specific model of video-projector applied to the bracket.

The use of universal supporting brackets of known type, however, has proved useful and advantageous in a very few cases, that is to say only for those models of video-projectors provided with a real anchoring platform, in which the series of four fixing holes is distributed on the same plane, although with different spatial location for each model.

Conversely, in most cases, the anchoring platform is not available and the four fixing holes are located on planes with different height, for example one on the bottom of an impression and one on the top of a projection.

The purpose of the present invention is to devise a universal supporting bracket used to hang sound and/or image reproduction devices from the ceiling, specifically video-projectors, capable of providing a final solution to the aforementioned problem.

The supporting bracket of the invention comprises a rod, whose end supports a disk with a perimetrical series of at least two curvilinear slots for the adjustable fixing of corresponding arms ending with a foot with threaded hole in which a special bolt is engaged, being characterised by the presence of a through axial hole that houses the screw used to fix the arm to the video-projector.

When fixing the bracket to the video-projector, the special bolt allows to place and hold all arms on the same plane, in spite of the lack of coplanarity between the threaded holes located on the video-projectors for the fixing screws of the supporting bracket.

In this regard, attention is drawn to the fact that the fixing screws are simply inserted through the special bolt, which can idle around the screw. After tightening it to the video-projector, the screw can act as swivel for the bolt, which can be used by the operator to adjust the setting planes of each arm, thus making all arms coplanar, regardless of the height of the hole in which the screw inserted into the regulation bolt is engaged.

For major clarity the description of the supporting bracket of the present invention continues with reference to the enclosed drawings, which are intended for purposes of illustration and not in a limiting sense, whereby:

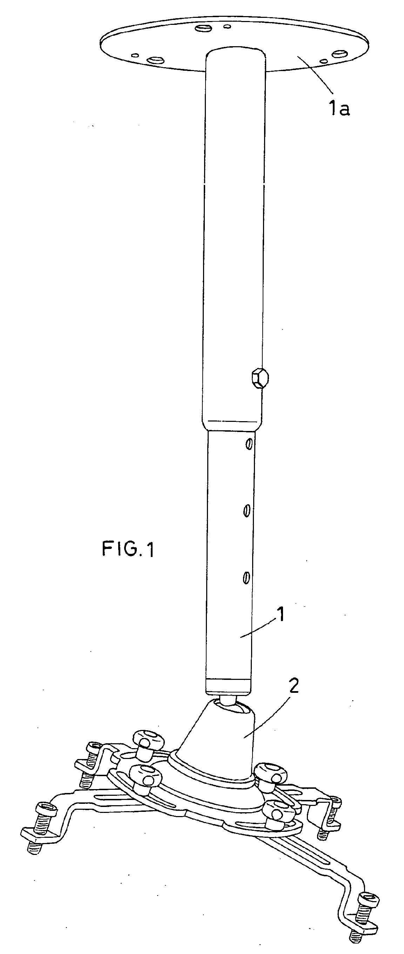

- Fig. 1 is a perspective view of the bracket of the invention;

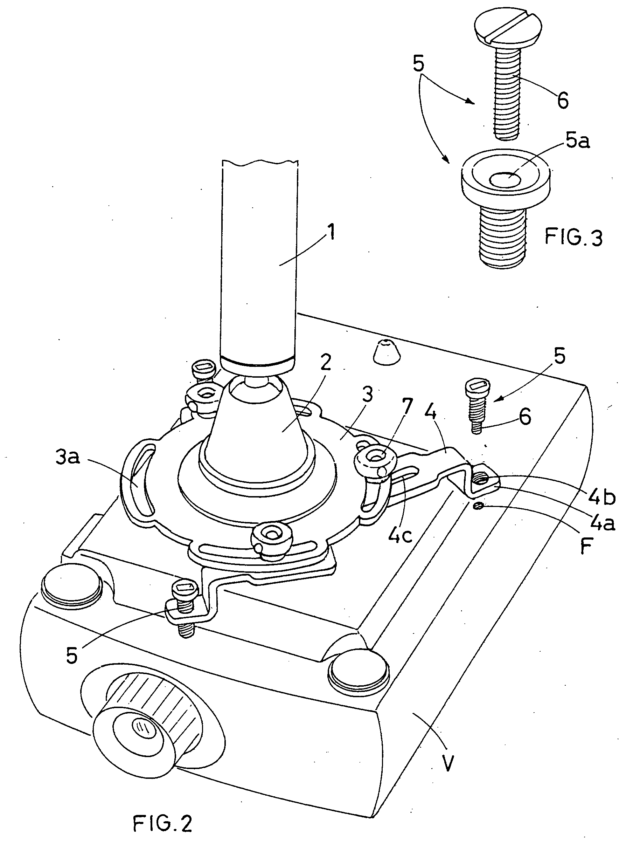

- Fig. 2 shows the bracket of the invention applied to a video-projector;
- Fig. 3 is a view of the special bolt.

With reference to the aforementioned figures, the bracket of the invention comprises a telescopic rod (1), whose end supports a disk (3) by means of a traditional spherical joint (2). The disk (3) is provided with a perimetrical series of four curvilinear slots (3a) for the adjustable fixing of corresponding rod-shaped arms (4) ending with a foot (4a) with a threaded hole (4b), in which a special bolt (5) engages. The special bolt (5) has an unthreaded axial through hole (5a) that houses the screw (6) used to fix the arm (4) to the video-projector (V).

Each arm (4) is provided with a longitudinal slot (4c) and connected to the disk (2) by means of a bolt (7) inserted into the slot (4c) and through one of the curvilinear slots (3a).

The fact that the bolt (7) is inserted into two slots, that is to say the curvilinear slot (3a) on the disk (3) and the rectilinear slot (4c) on the arm (4), allows to rotate the bolt (7) rightwards or leftwards or slide it in centrifugal or centripetal direction, in such a way that the position of the arm (4) can be adjusted from time to time in order to coaxially place the threaded hole (4b) over the threaded hole (F) located on the case of the video-projector (V).

The description continues with the procedure used to fix the supporting bracket of the invention to any model of video-projector.

In this regard, it must be noted that in the first place the arms (4) are disengaged from the supporting disk (3) and then independently and individually fixed to the video-projector (V).

Each arm (4) is fixed to the video-projector (V) by means of fixing screws (6) - normally provided with the video-projector (V) - that are inserted through the bolts (5) and tightened through the holes (F) of the video-projector (V).

After tightening the screws (6), the operator rotates each bolt (5) until the corresponding arm (4) is located on the same plane as the other arms (4). It appears evident that the by idling around the screw (6), each bolt (5) causes the vertical translation of the arm (4) thanks to the helicoidal coupling between the bolt (5) and the hole (4b).

Once the arms (4) have been placed on the same plane, the arms (4) are fixed to the disk (3) by means of bolts (7) inserted and tightened into the slots (3a and 4c).

The operator can now tighten the screws (6) in order to stabilise and ensure the safe fixing of the video-projector to the bracket.

Finally, it must be noted that the top of the rod (1) is provided with a fixing flange (1a) in order to be hung from the ceiling using ordinary screws.

## Claims

1. Universal supporting bracket used to hang sound and/or image reproduction devices from the ceiling, of the type comprising a bearing rod (1), which has a flange (1a) on top and supports a disk (3) at the base by means of a traditional spherical joint (2). The disk (3) is provided with adjustable radial arms (4) tightened to the case of the video-projector by means of ordinary screws (6), provided with threaded holes (F) for each fixing screw (6), bracket being **characterised in that** each arm (4) has a threaded hole (4b) at the end, in which a special bolt (5) engages (5), being provided with an unthreaded axial through hole (5a) that houses the screw (6) used to fix the arm (4) to the video-projector (V).

2. Universal supporting bracket used to hang sound and/or image reproduction devices from the ceiling, as defined in the preceding claim, **characterised in that** the disk (3) has at least two curvilinear slots (3a) for the adjustable fixing of corresponding arms (4), with each arm having a rod-shaped configuration, being provided with a longitudinal slot (4c) and being connected to the disk (3) by means of a bolt (7) inserted into the slot (4c) and through one of the curvilinear slots (3a) of the disk (3).

3. Bracket as defined in the preceding claims, **characterised in that** the threaded hole (4b) is located on a foot (4a) at the end of each arm (4).

4. Bracket as defined in the preceding claims, **characterised in that** the rod has a telescopic structure.
